# EUROPEAN PATENT APPLICATION

(11) **EP 4 755 753 A1**
(43) Date of publication of application: **10.06.2026**
(21) Application number: 25221148.7
(22) Date of filing: 05.12.2025
(51) Int. Cl.: B62B 3/02, B62B 5/00

(54) **RECTRACTABLE WHEELED CART FOR EASY HANDLING AND TRANSPORTING OF A UPHOLSTERED ARMCHAIR**

(30) Priority: 06.12.2024 EP 24218096
(71) Applicant: Motion SpA, 47121 Forli (FC) (IT)
(72) Inventor: RAVAIOLI, Elio Maurizio, Forlì (FC) (IT)
(74) Representative: Laghi, Alberto

(57) **Abstract**

A cart (C) comprising a substantially quadrilateral frame (T) defined by a pair (1) of transverse spars (2) front and rear (3) opposite each other; two opposite lateral arms (4,5) adapted to join said front and rear spars (2) (3); lever means (L) (LE) fulcrum between them and said arms (4,5) and connected to said arms (4,5); motorised actuator means (6,7) connected to rod means (9) arranged parallel to said spars (2,3); and wheel means (11', 11", 13' 13") mounted on said cart (C) at both ends of said rod means (9 ',11 ",13') and, respectively, at both ends of said rear spar (3) to allow the movement of said cart (C);t said wheel means (11',11" ,13' 13 ") are mounted retractably under the thrust of said means (6,7) and actuators from a retracted position to a paving position and contact of said cart (C).

## Description

The present invention relates to a retractable wheeled cart.

In particular, the invention in question is advantageously used and applied in the production and marketing of upholstered furniture such as armchairs, chairs or equivalent, to which the following description makes explicit reference without losing in general, in order to allow the easy and optimal handling and transport of an armchair on which a user is permanently seated, especially with walking difficulties or reduced mobility such as an elderly and/or non-self-sufficient person.

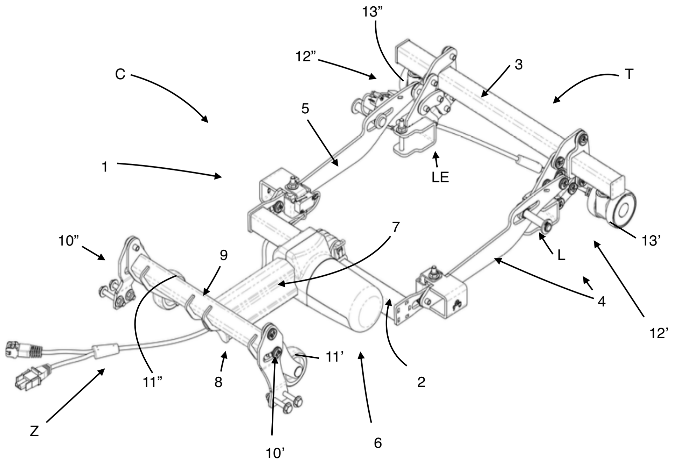

The structural and functional characteristics of the present invention and its advantages over the known art will become even clearer and more evident from the claims below, and in particular from an examination of the following description, referring to the attached drawing, which shows the layout of a preferred but non-limiting embodiment of a retractable wheeled cart applicable and mountable on an upholstered armchair or chair.

With reference to the attached schematic figure, C globally indicates a cart adapted to be applied/mounted on the bottom of a padded cabinet (known and not illustrated), such as an armchair, chair, the like, preferably but not limited to having reclining parts such as, for example, footrests and/or backrests, and to move the reclining parts themselves from a closed configuration to an open configuration (also known and not illustrated).

The cart C comprises a substantially quadrilateral frame T defined by a pair 1 of opposite front and rear cross members 2 and 3, substantially square in section and joined together by two opposite lateral rear arms 4 and 5. An L series of levers LE fulcrum between them and the arms 4 and 5 is connected to the arms 4 and 5 themselves.

To the front spar 2 is fixed an actuator 6 of the motorized piston type 7 transverse to the spar 2, to one mobile end 8 of which is mounted a shaped rod element 9 arranged parallel to the front spar 2 itself.

A movement wheel 11 ',11"is mounted to each end 10' ,10" of the rod element 9 by means of a special lever, and a movement wheel 13 ',13 "is mounted to each end 12' ,12" of the rear spar 3 by means of a special lever. In use, an actuation of the actuator 6 by acting on a button remote control (not shown) and connected to the actuator 6 itself by means of Z cables, is followed by a horizontal axial rotation of the element 9 that brings the wheels 11' and 11" from a retracted position to an operating position in contact with the floor and simultaneously, and also independently of any other mechanisms for moving moving moving moving parts (e.g. the load carrier) of the aforementioned upholstered chair
a sliding of the aforementioned arms 4 and 5 and the levers LE so as to also bring the wheels 13' and 13" from a retracted position to an operating position in contact with the floor.

In this way, with the cart C described above, it is advantageously possible to move and conveniently transport the upholstered armchair or chair that mounts it without necessarily having to lift the person seated on the armchair itself.

There is also a locking/safety system so that, when the upholstered armchair is in lift-person mode, no movement on the floor is possible.

## Claims

1. Cart (C) comprising a substantially quadrilateral frame (T) defined by a pair (1) of transverse spars (2) front and rear (3) opposite each other; two opposite lateral arms (4,5) adapted to join said front and rear spars (2) (3); lever means (L) (LE) fulcrum between them and said arms (4,5) and connected to said arms (4,5); motorised actuator means (6,7) connected to rod means (9) arranged parallel to said spars (2,3); and wheel means (11',11",13' 13") mounted on said cart (C) at both ends of said rod means (9 ',11 ",13') and, respectively, at both ends of said rear spar (3) to allow the movement of said cart (C); **characterised in that** said wheel means (11',11" ,13' 13 ") are mounted retractably under the thrust of said means (6,7) and actuators from a retracted position to a paving position and contact of said cart (C).

2. Cart according to claim 1, **characterized in that** it comprises remote control means for operating said actuator means (6,7).

3. Upholstered armchair or chair mounting cart (C) according to claim 1 or 2.
